# FASCICULE DE BREVET EUROPEEN

(11) **EP 3 172 517 B1**
(45) Date de publication et mention de la délivrance du brevet: **07.08.2019**
(21) Numéro de dépôt: 15729169.1
(22) Date de dépôt: 16.06.2015
(51) Int. Cl.: F28F 9/02, F01D 9/06, F02K 3/115, F28D 9/00

(54) **ECHANGEUR THERMIQUE A PLAQUES AVEC RENFORTS STRUCTURELS POUR TURBOMOTEUR**
PLATTENWÄRMETAUSCHER MIT STRUKTURELLEN VERSTÄRKUNGEN FÜR EINEN TURBINENMOTOR
PLATE HEAT EXCHANGER COMPRISING STRUCTURAL REINFORCEMENTS FOR A TURBINE ENGINE

(30) Priorité: 25.07.2014 FR 1401715
(43) Date de publication de la demande: 31.05.2017
(73) Titulaire: Airbus Helicopters, 13725 Marignane Cedex (FR)
(72) Inventeur: HONNORAT, Olivier, 13290 Aix en Provence (FR); DUBOURG, Christophe, 13100 Le Tholonet (FR)
(74) Mandataire: GPI & Associés
(86) Numéro de dépôt international: PCT/EP2015/063401
(87) Numéro de publication internationale: WO 2016/012161

(56) Documents cités:
- EP-A1- 2 336 698
- WO-A2-2010/132302
- DE-A1- 2 943 010
- DE-A1- 4 407 080
- FR-A1- 2 988 822

## Description

La présente invention se trouve dans le domaine des échangeurs de chaleur. L'invention concerne un échangeur thermique à plaques avec des renforts structurels dans lequel deux fluides circulent de préférence à contre-courant. Cet échangeur thermique est particulièrement destiné au réchauffement de l'air d'admission d'une turbine à gaz équipant un aéronef. L'invention concerne également une turbine à gaz équipée de cet échangeur ainsi qu'un aéronef à voilure tournante, tel un hélicoptère, motorisé par une ou plusieurs de ces turbines à gaz.

En effet, il est connu que le rendement des turbines à gaz est relativement faible. Notamment pour les turbomoteurs, type particulier de moteurs avec des turbines à gaz utilisés traditionnellement pour les aéronefs à voilures tournantes, ce rendement est de l'ordre de 25%.

Une solution connue pour améliorer ce rendement est de réchauffer l'air, après compression et avant son admission dans la chambre de combustion du turbomoteur. Cela permet alors de réduire le besoin thermique dans la chambre de combustion, et par suite, de réduire la consommation en carburant du turbomoteur.

Ce réchauffement de l'air d'admission peut notamment être obtenu en utilisant la chaleur des gaz d'échappement sortant de la turbine, cette chaleur n'étant généralement pas utilisée. Pour cela, des échangeurs thermiques adaptés sont notamment utilisés dans les centrales thermiques industrielles.

Par contre, l'application de tels échangeurs au domaine spécifique des turbomoteurs d'aéronefs se heurte à plusieurs problèmes majeurs, la masse et le volume de ces échangeurs ainsi qu'une perte de puissance du moteur utilisant un tel échangeur.

En effet, les gaz d'échappement sortent de la turbine à grande vitesse et leur circulation dans un échangeur récupérant une partie de leur chaleur génère des pertes de charge importantes sur la circulation de ces gaz d'échappement, entraînant une perte de puissance du turbomoteur.

De plus, le volume disponible dans un aéronef étant restreint, l'implantation d'un échangeur sur un turbomoteur pose des problèmes d'encombrement. Enfin, la masse est également un critère important affectant les performances de l'aéronef.

On connait le document FR2280870 qui décrit un échangeur dont les deux fluides circulent à contre courant. Cet échangeur est formé par des plaques métalliques, en aluminium par exemple, comportant des ondulations régulières. Ces ondulations sont parallèles entre elles et perpendiculaires aux flux des deux fluides.

Les deux cavités constituées par ces plaques ont un même volume, l'espacement entre les plaques étant constant et assuré par des entretoises et des bossages sur chaque plaque. L'étanchéité entre les plaques est obtenue par l'utilisation de matière plastique synthétique, la fixation des plaques entre elles étant obtenue par sertissage.

Le document US6016865 divulgue un échangeur à plaques pour l'échange thermique entre un premier fluide à haute pression et faible débit et un second fluide à basse pression et grand débit. Chaque plaque comporte des formes en saillie et en creux en chevrons, qui sont inclinées par rapport aux flux des fluides. Ces formes sont également inclinées entre elles sur deux plaques adjacentes.

Les plaques sont assemblées deux par deux, par soudure ou par brasure par exemple, sur leurs zones périphériques et au niveau des points d'appui entre les formes en creux pour former des modules. Ces modules sont ensuite empilés les uns sur les autres, étant en appui sur des bossages. Ainsi, les fluides peuvent circuler dans deux volumes indépendants, permettant un échange thermique entre eux.

Par ailleurs, le document EP1122505 décrit un échangeur thermique à plaques dont les plaques regroupées deux à deux sont positionnées dans un carter. De plus, chaque plaque comporte plusieurs cheminées qui, une fois regroupées, forment des conduites d'entrée et des conduites de sortie de l'échangeur.

On connait également le document FR2988822 qui décrit un échangeur thermique comportant une pluralité de plaques ayant les caractéristiques du préambule de la revendication 1. Chaque plaque comporte une multitude d'ondulations sinusoïdales parallèles et de hauteurs différentes et deux cheminées. Les plaques sont associées par paire en s'appuyant sur les ondulations les moins hautes et les modules formés par ces paires de plaques sont en appui sur les ondulations les plus hautes. Les diverses ondulations participent à l'agitation des fluides améliorant ainsi leurs échanges thermiques. Les plaques de cet échangeur sont de faibles épaisseurs et réalisées en Inconel®.

De plus, le document WO2010/132302 décrit un échangeur thermique comportant un noyau muni d'une pluralité de plaques empilées, un moyen de contrôle de l'assemblage de ce noyau et un logement dans lequel est positionné le noyau. Les plaques comportent des creux et des crêtes et sont associées par paire en s'appuyant sur ces crêtes. Le moyen de contrôle comporte plusieurs tirants filetés reliés deux à deux par un écrou permettant de régler le serrage des plaques.

Enfin, on connait le document US2002/174978 qui décrit un échangeur thermique comportant une pluralité de plaques empilées, une entrée d'air et une sortie d'air. Un tube muni d'ouvertures sur sa circonférence est positionnée dans l'entrée et dans la sortie d'air et est traversé respectivement par l'air entrant et l'air sortant de l'échangeur. Ce tube permet ainsi d'améliorer la rigidité de l'échangeur et en particulier d'absorber les contraintes mécaniques générées par les dilations thermiques des différents composants ainsi que par la pression de l'air entrant dans l'échangeur.

Ces différents échangeurs à plaques sont utilisables dans un moteur, leurs volumes et leurs masses étant dans des proportions raisonnables. Cependant, ils ne permettent pas de répondre à l'ensemble des contraintes générées par un turbomoteur équipant un aéronef à voilure tournante.

Hormis les contraintes de volumes et de masse précédemment évoquées, les gaz d'échappement d'un turbomoteur sont extrêmement chauds, de l'ordre de 700°C (degrés Celsius). De fait, les éléments constituant l'échangeur doivent être capables de résister à de telles températures. De plus, au démarrage du moteur, une variation de température très important et rapide, avec un passage d'une température de l'ordre de 15°C à 700°C en une dizaine de secondes se produit au sein de l'échangeur, et notamment sur chaque module constitué par l'association de deux plaques.

Chaque module se déforme alors suite à une dilatation thermique très importante et, les modules de l'échangeur étant liés entre eux, peut générer des contraintes mécaniques sur les autres modules de l'échangeur. Une augmentation importante des contraintes mécaniques au niveau de chaque module se produit, accompagnée d'une déformation générale de l'échangeur et en particulier une déformation importante au niveau des deux modules extrêmes de l'échangeur.

De plus, l'écart de température entre ces gaz d'échappement et l'air d'admission est important, de l'ordre de 300°C, voire près de 600°C au démarrage du turbomoteur. De même, l'écart de pression entre les deux fluides est important, les gaz d'échappement sortant de la turbine à la pression atmosphérique, alors que l'air d'admission entre dans l'échangeur à une pression comprise entre 6 et 11 bars.

Ces différences de pression et de température entre les deux fluides sont génératrices de contraintes thermiques et mécaniques supplémentaires sur l'échangeur. Ces contraintes sont susceptibles d'occasionner notamment des déformations et/ou des fissures sur les composants de cet échangeur ainsi que des criques ou des ruptures au niveau des soudures. Par la suite, l'étanchéité des modules de l'échangeur peut se dégrader, des fuites apparaissant au niveau de ces modules.

Plus particulièrement, l'air d'admission circulant dans l'échangeur avec une pression importante crée une poussée très importante sur les deux modules extrêmes de l'échangeur. En effet, l'air d'admission génère des zones de poussée localisées sur les deux parois obstruant les conduites d'entrée et de sortie, ces deux parois étant opposées respectivement à l'entrée et à la sortie de ces conduites. De grandes déformations apparaissent alors sur chaque module extrême pouvant aller jusqu'à sa dégradation. On entend par « modules extrêmes » le premier et le dernier modules de l'empilement des modules de l'échangeur thermique.

Des solutions existent pour renforcer ces modules extrêmes, telles que l'ajout de raidisseurs (emboutis) ou bien de brides de renforcement (pièces rapportées). Ces solutions ne réduisent pas la poussée subie par les modules extrêmes, mais elles limitent seulement les conséquences de cette poussée. Par suite, chaque module extrême continue de subir des déformations, qui peuvent certes être réduites, mais qui finalement généreront l'apparition de fissures et de fuites, voire de ruptures de ce module extrême et/ou de ses soudures. En conséquence, la durée de vie de l'échangeur se trouve réduite.

Enfin, pour avoir un rendement thermique correct de l'échangeur, c'est-à-dire une grande capacité de transmettre la chaleur des gaz d'échappement à l'air d'admission, les fluides doivent circuler sur une surface d'échange importante et avec un bon échange thermique. Par suite, la convection thermique entre les deux fluides est importante.

Un brassage des fluides entraîne une augmentation de la convection entre ces fluides et, par suite, permet également d'améliorer cet échange thermique. Par contre, ce brassage crée un écoulement turbulent de ces fluides, générant des pertes de charge qui peuvent être importantes. Les pertes de charge des fluides circulant dans l'échangeur et le coefficient d'échange thermique entre ces fluides sont donc directement dépendants.

Par ailleurs, les pertes de charge d'un fluide sont proportionnelles au premier ordre au carré de la vitesse de ce fluide. De fait, l'air d'admission circulant à faible vitesse, les pertes de charge subies sont très faibles. Par contre, les pertes de charge des gaz d'échappement sont d'autant plus importantes qu'ils sortent de la turbine à grande vitesse. Ces pertes de charge entraînent alors une perte de puissance du turbomoteur, qui est préjudiciable pour certaines phases de vol particulières, telles que les phases de décollage, d'atterrissage et de vol stationnaire.

La présente invention a alors pour objet de proposer un échangeur thermique à plaques permettant de s'affranchir des limitations mentionnées ci-dessus et plus particulièrement d'améliorer la durée de vie de cet échangeur thermique en réduisant les contraintes mécaniques et thermiques subies par les modules de l'échangeur thermique.

Selon l'invention, un échangeur thermique comporte une pluralité de modules formés de deux plaques métalliques. Chaque plaque comporte une zone périphérique, au moins une cheminée d'entrée, au moins une cheminée de sortie et une zone interne crénelée comportant des crêtes et des creux.

La zone périphérique est de préférence plane et forme alors un plan inférieur P1 dans lequel se situe le fond des creux. Chaque cheminée d'entrée et chaque cheminée de sortie s'élèvent de la zone périphérique jusqu'à un plan supérieur parallèle P2 au plan inférieur P1.

Les plaques sont assemblées par paire pour former un module. Ces deux plaques sont en appui d'une part au niveau de leurs zones périphériques et d'autre part au niveau des points de contact des creux. Ces deux plaques sont fixées d'une part au niveau des points d'appui de leurs zones périphériques et d'autre part au niveau d'au moins un point d'appui de leurs creux.

Ces deux plaques sont fixées par exemple par soudure et de préférence par brasure.

L'échangeur thermique selon l'invention est formé par l'empilement de plusieurs modules. Dans un tel échangeur, les directions des creux et des crêtes de chaque plaque forment un premier angle *β* avec la direction de circulation des fluides dans l'échangeur et les directions des creux et des crêtes de deux plaques adjacentes forment un second angle *θ* non nul entre elles.

Une conduite d'entrée de l'échangeur est formée par l'assemblage d'une cheminée d'entrée de chaque plaque constituant les modules. De même, une conduite de sortie est formée par l'assemblage d'une cheminée de sortie de chacune de ces plaques.

De fait, cet échangeur thermique comporte une ou plusieurs conduites d'entrée et une ou plusieurs conduites de sortie. Cet échangeur thermique comporte autant de conduites d'entrée que les plaques constituant les modules comportent de cheminées d'entrée et autant de conduites de sortie que ces plaques comportent de cheminées de sortie.

L'échangeur thermique selon l'invention comporte également un carter dans lequel sont logés les modules, ce carter étant muni de plusieurs parois.

Deux ouvertures supplémentaires sont agencées dans le carter pour former une entrée et une sortie de l'échangeur.

Une première cavité est constituée par l'espace intérieur d'un module, c'est-à-dire par l'espace entre les deux plaques de ce module. Un premier fluide circule alors dans la totalité des premières cavités des modules de l'échangeur thermique entre chaque conduite d'entrée et chaque conduite de sortie.

Une seconde cavité est principalement constituée par l'espace entre deux modules adjacents et également par l'espace entre chaque module extrême et une paroi du carter. Un second fluide circule alors dans la totalité des secondes cavités des modules de l'échangeur thermique entre l'entrée et la sortie de l'échangeur thermique.

Ce second fluide peut ainsi circuler parallèlement au premier fluide et de préférence en sens inverse à ce premier fluide : on a alors un échangeur à contre courant.

Toutefois, le second fluide peut également circuler parallèlement et dans le même sens que le premier fluide : on a alors un échangeur à co-courant.

Une troisième cavité est constituée par l'espace situé entre les zones périphériques des modules et les parois du carter. Le second fluide peut également circuler dans cette troisième cavité.

Ce dispositif est remarquable en ce que les modules sont empilés de telle sorte que deux modules adjacents sont en appui au niveau de leurs cheminées d'entrée et de leurs cheminées de sortie, une première distance non nulle séparant les crêtes des deux plaques adjacentes de deux modules adjacents. Dans ce but, les crêtes de chaque plaque se situent dans un plan intermédiaire P3, qui est parallèle aux plans inférieur et supérieur et positionné entre ces deux plans.

Deux modules adjacents sont fixés au niveau des cheminées d'entrée et des cheminées de sortie, par exemple par soudure et de préférence par brasure. De même, chaque module extrême de l'empilement des modules est fixé à une paroi au niveau de chaque cheminée d'entrée et de chaque cheminée de sortie par soudure et de préférence par brasure.

Une pluralité de modules est empilée pour former l'échangeur thermique, objet de l'invention. L'échangeur comporte ainsi plusieurs premières cavités et plusieurs secondes cavités.

Les premières cavités sont reliées entre elles par l'intermédiaire de chaque conduite d'entrée formée par les cheminées d'entrée de chaque plaque et par l'intermédiaire de chaque conduite de sortie formée par les cheminées de sortie de chaque plaque. Une extrémité des conduites d'entrée et de sortie débouche hors de l'échangeur au niveau des parois du carter et permet respectivement l'entrée et la sortie du premier fluide circulant dans les premières cavités.

Les secondes cavités sont reliées entre elles notamment au niveau de l'entrée et de la sortie de l'échangeur ainsi que par l'espace en périphérie de chaque plaque constituant la troisième cavité. La circulation du second fluide est limitée par les parois de ce carter.

De la sorte, des échanges thermiques entre les deux fluides circulant dans les premières et secondes cavités sont réalisés par l'intermédiaire des plaques, les deux fluides circulant en parallèle de part et d'autre des plaques et de préférence en sens inverse.

Par contre, aucun échange thermique entre les deux fluides ne se produit lorsque le second fluide circule dans la troisième cavité. Au moins une partie de cette troisième cavité peut comporter une pluralité de peignes permettant d'orienter le second fluide vers les secondes cavités. En effet, un fluide se dirige naturellement vers l'espace facilitant sa circulation, c'est-à-dire où les pertes de charge sont les plus faibles. Le second fluide se dirigerait donc naturellement et essentiellement vers la troisième cavité si elle ne comportait pas ces peignes.

Ces peignes occupent ainsi la totalité de la hauteur de la troisième cavité, entre les parois du carter et les modules, afin de faire obstacle au second fluide et de l'orienter vers les secondes cavités.

Ces peignes permettent également par leur forme particulière de se positionner entre les modules, en périphérie des plaques, garantissant ainsi l'espacement entre ces modules.

Afin que le module de l'échangeur soit homogène, en termes de matière et de dilatation thermique notamment, les peignes sont dans un matériau proche de celui des plaques constituant cet échangeur. De préférence, les peignes sont réalisés dans le même matériau que ces plaques.

Avantageusement, les modules formant l'échangeur thermique selon l'invention sont en appui au niveau des cheminées d'entrée et de sortie ainsi qu'éventuellement au niveau des peignes présents entre les parois et les modules. En conséquence, les comportements mécanique et thermique de chaque module sont indépendants des autres modules.

Chaque module peut ainsi subir des déformations importantes dues d'une part à une dilatation thermique consécutive à des différences de températures importantes entre le premier et le second fluides et d'autre part à une pression importante du premier fluide et/ou à une différence de pression importante entre le premier et le second fluides.

Ces déformations d'un module se produisent essentiellement au niveau des creux et des crêtes. Par suite, les creux et les crêtes d'un module n'étant pas en contact avec les modules adjacents ou bien le carter de l'échangeur thermique, ces déformations ne se propagent pas aux autres modules, ni au carter et ne génèrent donc aucune contrainte sur les modules adjacents ou bien le carter.

Ainsi, l'échangeur thermique selon l'invention permet à chaque module de se déformer librement afin d'absorber les contraintes thermiques et mécaniques qu'il subit. De la sorte, cet échangeur thermique permet d'améliorer la durée de vie de chaque module aux cycles thermiques et de pression et, par suite, la durée de vie de l'échangeur thermique dans son entier.

En conséquence, l'échangeur thermique selon l'invention est particulièrement adapté à un premier fluide dont la pression est importante et/ou dont la pression est notablement plus importante que celle du second fluide. De plus, cet échangeur thermique est également adapté pour subir des écarts de températures importants consécutifs aux différences de températures importantes entre le premier et le second fluides lorsqu'ils entrent dans l'échangeur thermique.

Avantageusement, cette amélioration de la durée de vie de l'échangeur thermique est obtenue sans ajout de composants de rigidification ou de renforcement, c'est-à-dire sans augmentation de la masse de cet échangeur thermique.

Par ailleurs, les creux et les crêtes des plaques peuvent prendre plusieurs formes utilisées traditionnellement dans un échangeur thermique. Ces différentes formes peuvent notamment être imposées par le matériau constituant ces plaques et d'éventuelles contraintes de mise en forme de ces plaques ainsi qu'afin d'optimiser les échanges thermiques entre le premier et le second fluides.

Les creux et les crêtes des plaques ont par exemple des formes de créneaux de section rectangulaire ou bien de formes trapézoïdales. Les crêtes et les creux peuvent également être des ondulations sinusoïdales.

En outre, les creux et les crêtes d'une plaque peuvent être selon une seule direction telle une ligne droite sur l'ensemble de cette plaque. Par exemple, les creux et les crêtes sont dirigés selon des directions parallèles.

A contrario, les creux et les crêtes d'une plaque peuvent être selon plusieurs directions sécantes sur l'ensemble de cette plaque. Par exemple, les creux et les crêtes sont selon deux directions sécantes formant ainsi des chevrons, c'est-à-dire que chaque creux et chaque crête d'une plaque sont constitués de deux droites formant un « V », ces deux droites formant un angle généralement aigu entre elles.

Bien entendu, d'autres formes sont envisageables pour les creux et crêtes de ces plaques. Ces formes doivent toutefois être compatibles avec la réalisation et l'empilement des modules ainsi que la circulation des premier et second fluides.

Par ailleurs, pour avoir un bon compromis entre échange thermique et pertes de charge, les crêtes et les creux des plaques forment un premier angle *β* avec la direction de circulation des deux fluides. En effet, si les directions des creux et des crêtes étaient parallèles à la direction de circulation des fluides, leurs effets sur les pertes de charge seraient minimes, mais elles généreraient par contre peu de mouvements de ces fluides. Elles ne favoriseraient alors pas les turbulences, et par suite, les échanges thermiques entre les fluides.

A contrario, si les directions des creux et des crêtes étaient perpendiculaires à la direction de circulation des fluides, elles généreraient beaucoup de mouvements, donc de turbulence sur ces fluides, favorisant ainsi les échanges thermiques. Par contre, leurs effets sur les pertes de charge seraient alors importants.

En conséquence, pour avoir un bon compromis permettant de générer une turbulence acceptable sur les deux fluides et, par suite, un bon échange thermique tout en limitant les pertes de charge sur ces deux fluides, les directions des creux et des crêtes sont inclinées par rapport à la direction de circulation des deux fluides d'un premier angle *β* aigu. Par exemple, ce premier angle *β* entre les directions des creux ainsi que celles des crêtes et la direction de circulation des deux fluides est compris entre 30° et 60°.

De plus, il peut être intéressant afin d'optimiser l'échange thermique entre les deux fluides que ce premier angle *β* varie dans l'échangeur. Par exemple, ce premier angle *β* augmente dans le sens de circulation du premier fluide. Par exemple, la variation de ce premier angle *β* est comprise entre 5° et 20° de la conduite d'entrée à la conduite de sortie de l'échangeur. De préférence, la variation de ce premier angle *β* est égale à 10° de la conduite d'entrée à la conduite de sortie de l'échangeur.

De même, un second angle *θ* entre les directions des creux et des crêtes de deux plaques adjacentes a des effets sur les turbulences des écoulements des deux fluides et sur les pertes de charge de ces fluides. De la même manière que précédemment, et pour obtenir un bon compromis entre pertes de charge et turbulences, et par suite échange thermique, ce second angle *θ* entre les directions des creux et des crêtes de deux plaques adjacentes doit être un angle non nul. Ce second angle *θ* entre les directions des creux et des crêtes de deux plaques adjacentes est de préférence compris entre 60° et 120° selon la direction de circulation des fluides.

Par ailleurs, l'échangeur est obtenu par l'empilage de ces modules. La fixation de ces modules entre eux peut être obtenue par bridage ou par soudure par exemple. De préférence, ces modules sont fixés par brasure au niveau des points d'appui des cheminées d'entrée et de sortie. De plus, leur espacement peut être maintenu par les peignes situés dans la troisième cavité.

De même, les parois du carter peuvent être fixées par bridage. De préférence, ces parois sont fixées entre elles par brasure et une paroi est respectivement fixée à chaque module extrême par brasure également.

Ce mode de fixation garantit l'étanchéité de l'échangeur ainsi que sa tenue aux contraintes thermiques et mécaniques qu'il subit.

Lors de l'utilisation de l'échangeur thermique selon l'invention dans un turbomoteur d'aéronef à voilure tournante, les composants de l'échangeur sont soumis à de fortes contraintes thermiques et mécaniques, les premier et second fluides pouvant être à des températures élevées et très différentes, ainsi qu'à des pressions également élevées et différentes.

De plus, ces sollicitations sont accentuées lorsque l'aéronef réalise de nombreux démarrages et arrêts dans des temps rapprochés, par exemple deux à quatre démarrages en une heure. En effet, dans ce cas, l'échangeur thermique est soumis de façon répétée à des montées rapides en température et en pression, puis à des baisses de température et de pression, sans période de stabilisation. De ce fait, des contraintes thermiques et mécaniques importantes ainsi qu'un phénomène de fatigue sont susceptibles d'occasionner notamment des fissures sur les plaques de cet échangeur ou bien des criques voire des ruptures au niveau des soudures.

Afin de résister au mieux à ces sollicitations, les plaques peuvent être réalisées à partir d'un matériau connu sous le nom « inconel® » et les brasures sont réalisées avec de l'inconel® ou bien un métal fortement chargé en Nickel, dont la composition est très proche de celle de l'inconel®. Cela permet d'avoir un ensemble se déformant uniformément thermiquement. De même, les parois du carter sont en inconel® et leur assemblage est réalisé par brasage avec un métal identique ou bien très proche de celui utilisé pour le brasage des plaques.

De plus, pour que l'ensemble de l'échangeur reste homogène, en termes de matière et de dilatation thermique notamment, les peignes sont le cas échéant également en Inconel®.

Cependant, d'autres matériaux peuvent également être utilisés pour réaliser ces plaques selon les sollicitations subies par l'échangeur et les plaques en particulier.

Par contre, la conductivité thermique de l'inconel® est faible, nettement inférieure à celle d'un acier doux ou à celle de l'aluminium. De fait, son utilisation n'est pas habituelle dans un échangeur thermique. En outre, la mise en forme de l'inconel® peut s'avérer complexe suivant les formes souhaitées.

Pour compenser cette faible conductivité thermique et fournir à l'échangeur, selon l'invention, un bon rendement thermique, l'épaisseur des plaques constituant l'échangeur est faible.

En effet, en utilisant des plaques d'une épaisseur comprise entre 0.1 et 0.25 mm par exemple, les échanges thermiques entre les deux fluides se font quasiment directement, c'est-à-dire comme s'il n'y avait pas de plaques entre eux. De fait, le rendement thermique de l'échangeur est excellent malgré l'utilisation d'un matériau à faible conductivité thermique.

La tenue à la corrosion de l'inconel® est également très importante, ce qui est favorable à l'utilisation dans un échangeur destiné à un turbomoteur d'aéronef. En effet, les gaz d'échappement sont corrosifs et peuvent générer l'oxydation d'un matériau non résistant.

L'inconel® est également d'une grande ductilité. Cette caractéristique permet alors aux plaques de résister aux différences de température et de pression des fluides circulant de part et d'autre de ces plaques, sans dégradation de ces plaques.

Ces différences de température et de pression entre les cavités sont également susceptibles d'occasionner des criques et des ruptures au niveau des soudures. L'utilisation d'une brasure telle que précédemment décrite lors du brasage des plaques permet d'éviter également ces dégradations. En effet, l'utilisation d'un métal d'apport très proche du métal constituant les plaques permet de limiter les effets différentiels de déformation dans ces zones de brasage entre les plaques et la brasure, donc d'éviter l'apparition de criques ou de ruptures.

De plus, les plaques peuvent être assemblées entre elles par un brasage dit « dur », réalisé entre 900°C et 1100°C. Afin de résister aux températures des fluides lors du fonctionnement de l'échangeur, le métal d'apport est un alliage d'inconel® modifié en fonction du point de brasage, pour abaisser sa température de fluage, au fur et à mesure du montage de l'échangeur.

Enfin, les différences de pression et de température entre les deux fluides sollicitent également l'étanchéité entre les deux cavités de l'échangeur. L'étanchéité dans l'échangeur selon l'invention est assurée par le brasage entre les plaques. Comme évoqué précédemment, la brasure utilisée lors de ces brasages permet de garantir une bonne tenue des zones de soudure à ces sollicitations, et par suite une bonne tenue de l'étanchéité.

Par contre, la faible épaisseur des plaques en inconel® pourrait poser un problème vis à vis des contraintes mécaniques, notamment la différence de pression entre les deux fluides circulant dans les premières et les secondes cavités, et des contraintes thermiques. La forme et l'assemblage des plaques permettent cependant de résister à ces contraintes. De préférence, les creux et les crêtes de plaques réalisées en inconel® sont, à cet effet, des ondulations sinusoïdales.

La réalisation de ces ondulations sinusoïdales est toutefois une opération délicate. En effet, quel que soit le matériau utilisé, sa limite d'allongement peut être dépassée et des fissures ou criques, dues aux contraintes de formage de la plaque, peuvent apparaitre dans certaines zones de cette plaque. L'utilisation de l'inconel® ne facilite pas ce formage, ses caractéristiques mécaniques n'étant pas favorables à de telles mises en forme.

Pour pallier ces risques, la technique de l'électro-hydroformage peut être utilisée. Cette technique consiste à déformer plastiquement, éventuellement en plusieurs passes, une pièce de faible épaisseur, une plaque par exemple, sous l'action d'un fluide sous pression placé dans un champ électrique intense. D'autres techniques peuvent également être utilisées pour mettre en forme les plaques, telles que le formage à chaud ou bien le formage à froid en utilisant plusieurs passes avec d'éventuels recuits intermédiaires.

L'échangeur thermique selon l'invention peut de plus comporter une ou plusieurs caractéristiques supplémentaires.

Notamment, le premier fluide peut générer, lorsqu'il entre dans l'échangeur sous une grande pression, une poussée importante au sein de l'échangeur. Cette poussée importante générée par la pression statique du premier fluide s'applique sur l'extrémité obstruée de chaque conduite d'entrée et de chaque conduite de sortie. Cette extrémité obstruée de chaque conduite d'entrée et l'extrémité de chaque conduite de sortie est généralement obstruée respectivement par une paroi du carter. Par suite, cette poussée importante peut se transmettre au module extrême qui est fixé à chacune de ces parois et, par suite, provoquer de grandes déformations sur ces modules extrêmes et éventuellement leurs dégradations.

L'échangeur selon l'invention peut comporter un tirant situé dans chaque conduite d'entrée et dans chaque conduite de sortie afin d'éviter de transmettre cette poussée importante aux deux modules extrêmes de l'échangeur.

Une première ouverture et une seconde ouverture sont respectivement agencées dans deux des parois du carter, au niveau des extrémités de chaque conduite d'entrée. De même, une troisième ouverture et une quatrième ouverture sont respectivement agencées dans deux de ces parois au niveau des extrémités de chaque conduite de sortie.

Chaque tirant comporte une partie tubulaire, une cinquième ouverture à une première extrémité du tirant et un fond bombé à une seconde extrémité de ce tirant. La première extrémité de chaque tirant est fixée à une des parois du carter au niveau de la première ouverture ou bien de la troisième ouverture et la seconde extrémité de chaque tirant est fixée à une autre des parois du carter au niveau de la seconde ouverture ou bien de la quatrième ouverture. Chaque tirant est fixé par exemple par soudure et de préférence par brasure à une paroi du carter au niveau d'une part de la cinquième ouverture et d'autre part du fond bombé. Cette fixation de chaque tirant par soudure ou bien par brasure assure ainsi d'une part l'étanchéité de l'échangeur thermique et d'autre part la tenue mécanique de ce tirant.

De fait, le premier fluide entre dans la conduite d'entrée par l'intermédiaire de ce tirant et plus précisément par la cinquième ouverture. De plus, le tirant comporte plusieurs alvéoles sur sa partie tubulaire, ces alvéoles se trouvant face aux premières cavités au niveau des cheminées d'entrée de chaque plaque. Ainsi, ces alvéoles permettent la circulation du premier fluide entre les premières cavités et d'une part la conduite d'entrée, d'autre part la conduite de sortie.

La partie tubulaire du tirant a une section équivalente à la section de chaque conduite d'entrée et de sortie afin d'être logée à l'intérieur de cette conduite. La conduite étant généralement cylindrique, la partie tubulaire du tirant est de forme cylindrique également. Par contre, la partie tubulaire du tirant n'est fixée à aucune plaque formant les modules de l'échangeur thermique.

Lorsqu'il entre dans l'échangeur thermique, le premier fluide se répartit dans chaque conduite d'entrée, puis dans les premières cavités et enfin dans chaque conduite de sortie. Sa pression statique agit alors majoritairement sur le fond bombé de chaque tirant. Chaque fond bombé permet, par sa forme, de répartir sensiblement de façon uniforme la pression du premier fluide et subit alors peu de déformation. De plus, une poussée axiale générée par la pression du premier fluide s'exerce principalement, voire uniquement sur le fond bombé de chaque tirant et est ainsi reprise directement par chaque tirant en traction. Cette poussée axiale est ainsi transmise aux parois sur lesquelles sont fixés les tirants, sans être transmise aux modules de l'échangeur thermique.

Le fond bombé du tirant a idéalement une forme hémisphérique afin de répartir parfaitement la pression du premier fluide sur ce fond bombé. Cependant, un fond bombé hémisphérique peut être pénalisant en termes d'encombrement.

Afin de limiter cet encombrement, le fond bombé a de préférence une forme hémisphérique aplatie que l'on peut désigner par l'expression « quasi sphérique ». Un tel fond bombé quasi sphérique permet ainsi d'avoir un bon compromis entre la répartition de la pression du premier fluide sur ce fond bombé et son encombrement.

Bien entendu, d'autres formes pour le fond bombé peuvent être utilisées, ces formes pouvant notamment être imposées par le matériau choisi pour réaliser ce fond bombé et d'éventuelles contraintes de mise en forme.

De plus, chaque tirant ne génère pas de pertes de charge supplémentaires significatives sur le premier fluide, les alvéoles étant placées face aux premières cavités ainsi que suffisamment grandes et nombreuses. L'utilisation d'un tirant dans chaque conduite d'entrée et dans chaque conduite de sortie ne détériore donc pas les performances de l'échangeur thermique tout en améliorant sa tenue mécanique.

Chaque tirant peut également être décomposé en plusieurs composants afin de faciliter sa fabrication et/ou son assemblage sur les parois du carter. Un tel tirant comporte par exemple une partie tubulaire, un fond bombé et une bride comportant la cinquième ouverture. La bride est fixée à une paroi du carter au niveau de la première ouverture ou de la troisième ouverture alors que le fond bombé est fixé à une autre paroi au niveau de la seconde ouverture ou de la quatrième ouverture. Cette bride est d'une section équivalente à la partie tubulaire, cette partie tubulaire étant fixée d'une part à cette bride et d'autre part à une paroi au niveau de la seconde ouverture ou de la quatrième ouverture.

Par ailleurs, lorsque le second fluide entre dans l'échangeur thermique à très haute température, la température interne de l'échangeur augmente de façon importante très rapidement.

Plus particulièrement, une partie de chaque conduite d'entrée et de chaque conduite de sortie est exposée directement au flux de ce second fluide, cette « partie exposée » de chaque conduite s'échauffe alors très rapidement. Par contre, une autre partie de chaque conduite n'est pas exposée directement à ce flux du second fluide, cette « partie non exposée » de chaque conduite s'échauffant alors beaucoup moins rapidement.

En conséquence, une dilatation différentielle importante entre la partie exposée et la partie non exposée de chaque conduite apparait très rapidement dès que le second fluide entre dans l'échangeur. Cette dilatation différentielle peut atteindre plusieurs millimètres et générer des contraintes importantes au niveau des plaques ou des modules et une fatigue accélérée, cette zone de fixation des plaques au niveau des cheminées d'entrée et des cheminées de sortie de ces plaques étant particulièrement rigide. Notamment, des criques peuvent apparaître sur les fixations entre deux plaques formant un module au niveau des cheminées d'entrée et/ou de sortie de ces plaques. De même, des fissures peuvent également apparaître sur les plaques à proximité de ces cheminées d'entrée et/ou de sortie. Ces criques et/ou ces fissures entraînent ensuite des dégradations des plaques et/ou des modules, telles que des fuites, voire des ruptures de plaques ou d'un module.

Afin de limiter les effets de cette dilation différentielle, une zone flexible est intégrée à proximité de chaque cheminée d'entrée et de chaque cheminée de sortie de ces plaques afin d'absorber au moins une partie des déformations consécutives à cette dilatation différentielle. Cette zone flexible permet notamment à deux modules adjacents de se déformer indépendamment l'un de l'autre. Cette zone flexible permet également à chaque conduite d'entrée et à chaque conduite de sortie de se déformer radialement, la partie exposée de chaque conduite se dilatant de façon plus importante que la partie non exposée, sans introduire de contraintes supplémentaires au niveau des plaques et des modules.

Cette zone flexible démarre de préférence sur le plan supérieur P2 et est située entre le plan supérieur P2 et le plan inférieur P1. Cette zone flexible peut être formée par une ou plusieurs vagues intégrées à chaque plaque autour des cheminées d'entrée et des cheminées de sortie. Cette zone flexible est radiale et située au plus près de la cheminée d'entrée et de la cheminée de sortie. Cette zone flexible joue ainsi le rôle d'une rotule permettant à chaque conduite de se déformer, voire de se tordre plus aisément en limitant les contraintes transmises au delà de cette zone flexible.

Chaque vague de cette zone flexible a par exemple la forme d'une demi-période d'une onde sinusoïdale. Cette zone flexible comporte de préférence une seule vague afin de limiter son encombrement.

De plus, un écran de protection peut également être positionné entre deux modules afin de protéger chaque cheminée d'entrée et chaque cheminée de sortie d'un contact direct avec le flux du second fluide. Cet écran de protection protège également la liaison entre deux modules au niveau des cheminées d'entrée et de sortie d'un contact direct avec ce flux du second fluide.

Afin de protéger au mieux les cheminées et la liaison entre les modules, cet écran de protection est situé entre chaque plan intermédiaire P3 des deux plaques adjacentes de deux modules adjacents, c'est-à-dire entre les crêtes de ces deux plaques adjacentes. L'effet du flux du second fluide est ainsi réduit sur la partie exposée de chaque conduite d'entrée et de sortie, uniformisant ainsi radialement le réchauffement de chaque conduite d'entrée et de sortie. De fait, cet écran de protection permet de réduire la dilatation différentielle entre la partie exposée et la partie non exposée.

Cet écran de protection est par exemple un tube de section circulaire, chaque cheminée d'entrée et chaque cheminée de sortie étant cylindrique et de section circulaire. Un écran de protection est ainsi positionné autour de chaque cheminée d'entrée et de chaque cheminée de sortie et concentrique avec chaque cheminée d'entrée ou de sortie.

La fonction des écrans de protection est de protéger la partie exposée de chaque cheminée d'entrée et de chaque cheminée de sortie du flux du second fluide. De fait, chaque écran de protection peut également être constitué par une portion de tube, par exemple par un demi-tube. Les demi-tubes sont alors positionnés autour des cheminées d'entrée et des cheminées de sortie, au niveau de la partie exposée de chaque cheminée d'entrée et de sortie, et de façon concentrique avec chaque cheminée d'entrée ou de sortie.

Le matériau de cet écran de protection est identique à celui des plaques, de même que son épaisseur. La hauteur de cet écran de protection permet de le positionner entre deux modules, un jeu prenant en compte d'une part la dilation de cet écran de protection qui est soumis au flux du second fluide et d'autre part la déformation et la dilation des plaques de chaque module.

Afin de limiter au maximum les effets thermiques du flux du second fluide sur chaque cheminée d'entrée ou de sortie, l'utilisation d'un écran de protection peut être combinée avec l'utilisation d'une zone flexible. Dans ce cas, l'écran de protection est de préférence positionné à l'extérieur de la zone flexible, par rapport au centre des cheminées d'entrée ou de sortie. L'utilisation conjointe d'une zone flexible et d'un écran de protection permet de réduire de façon drastique les contraintes thermiques importantes subies généralement par les conduites d'entrée ou de sortie d'un échangeur équipant notamment un turbomoteur et allonge ainsi grandement sa durée de vie.

En outre, chaque module, quelle que soit sa position au sein de l'échangeur, est traversé par le premier fluide et doit donc résister à la pression de ce premier fluide. Cette pression du premier fluide, lorsqu'elle est importante, a tendance à faire gonfler le module, voire à le faire éclater. Dans la partie centrale du module, les points de fixation entre les deux plaques constituant ce module sont suffisamment nombreux pour permettre aux modules de résister à cette pression.

Par contre, à proximité des conduites d'entrée et de sortie, le nombre de points de fixation est généralement plus faible, les directions des creux des plaques constituant ce module étant sécantes. En conséquence, ces points de fixation peuvent rompre sous l'effet de la pression du premier fluide, entrainant une dégradation du module et, par suite, des fuites.

De fait, afin d'augmenter le nombre de points de fixation entre les deux plaques constituant ce module et, par suite, renforcer cette zone, une rondelle de rigidification peut être positionnée entre ces deux plaques en périphérie de chaque cheminée d'entrée et de chaque cheminée de sortie. Cette rondelle de rigidification peut être fixée à chacune des plaques par exemple par soudure et de préférence par brasure au niveau des creux de ces plaques et éventuellement de la zone périphérique. Cette rondelle de rigidification peut être complète, c'est-à-dire couvrir 360°, afin d'être fixée sur les creux situés autour d'une cheminée d'entrée ou d'une cheminée de sortie et sur la zone périphérique autour de cette cheminée d'entrée ou de sortie. Cette rondelle de rigidification peut également avoir la forme d'un arc de cercle afin d'être fixée uniquement au niveau des creux situés autour d'une cheminée d'entrée ou d'une cheminée de sortie.

Cette rondelle de rigidification augmente considérablement la surface de contact et de liaison entre les deux plaques constituant un module. Cette rondelle de rigidification permet ainsi de renforcer la tenue de chaque module à la pression du premier fluide.

Avantageusement, cette rondelle de rigidification permet également de rendre chaque module tolérant à une rupture potentielle d'un ou plusieurs points de fixation à proximité de la cheminée d'entrée et de la cheminée de sortie, augmentant ainsi la durée de vie de l'échangeur thermique selon l'invention.

Cette rondelle de rigidification a une faible épaisseur. Par exemple, cette rondelle de rigidification a une épaisseur équivalente aux plaques, c'est-à-dire comprise entre 0.1 et 0.25mm. Cette rondelle de rigidification est métallique. De préférence, cette rondelle de rigidification est constituée du même matériau que les plaques.

Par ailleurs, afin de positionner cette rondelle entre deux plaques constituant un module sans remettre en cause les autres points de fixation de ces deux plaques, les creux ont localement une profondeur réduite permettant de positionner la rondelle de rigidification entre les deux plaques. Chaque creux d'une plaque de ce module a ainsi une profondeur réduite d'une valeur au moins égale à la moitié de l'épaisseur de la rondelle de rigidification.

En outre, des volets mobiles peuvent être positionnés dans la troisième cavité, entre les modules et au moins une des parois. Ces volets mobiles permettent dans une première position ouverte la circulation du second fluide majoritairement dans la troisième cavité et ne permettent pas dans une seconde position fermée la circulation du second fluide dans cette troisième cavité. Dans cette seconde position fermée, le second fluide circule alors dans les secondes cavités.

Dans la seconde position fermée, les volets occupent par exemple toute la hauteur de cette troisième cavité. De fait, le second fluide rencontre, dans cette troisième cavité, des obstacles constitués par ces volets et est orienté majoritairement vers une zone dans laquelle il peut circuler, c'est-à-dire les secondes cavités de l'échangeur.

De plus, l'invention a aussi pour objet une turbine à gaz équipée d'un tel échangeur. Le premier fluide est alors constitué par l'air d'admission de la chambre de combustion de la turbine, sortant d'un compresseur, et le second fluide est constitué par les gaz d'échappement sortant de la turbine.

La turbine à gaz comporte au moins une volute froide et au moins une volute chaude. La volute froide permet à l'air d'admission de circuler du compresseur de la turbine vers la conduite d'entrée de l'échangeur, alors que la volute chaude permet à l'air d'admission de circuler de la conduite de sortie de l'échangeur vers la chambre de combustion de la turbine.

La turbine à gaz comporte également au moins une tuyère intermédiaire et une tuyère de sortie. Les gaz d'échappement sortent de la turbine par la tuyère intermédiaire et sont dirigés vers l'entrée de l'échangeur et la tuyère de sortie dirige les gaz d'échappement après qu'ils soient sortis par la sortie de l'échangeur vers l'extérieur de la turbine.

L'échangeur peut être installé dans la continuité de la turbine ou à côté de la turbine. Dans le premier cas, les gaz d'échappement sont dirigés directement vers l'échangeur après leur sortie de la turbine, mais le volume d'un tel ensemble turbine à gaz-échangeur est très important.

Dans le second cas, les gaz d'échappement doivent être orientés vers l'échangeur positionné à côté de la turbine à gaz. Pour cela, la tuyère intermédiaire comprend un coude qui, par sa géométrie adaptée, permet d'assurer cette orientation des gaz d'échappement en minimisant les pertes de charge. L'ensemble turbine à gaz-échangeur a alors un volume plus compact que dans le premier cas, et peut, par exemple, être intégré dans un aéronef.

Afin de résister aux contraintes thermiques et mécaniques tout en assurant l'étanchéité nécessaire au bon fonctionnement de l'échangeur, des soufflets métalliques sont agencés à la jonction entre l'échangeur et les différents éléments de la turbine à gaz.

En effet, l'échangeur se trouvant dans un environnement à haute température, l'ensemble des composants de l'échangeur et du moteur peuvent se dilater. Ces soufflets permettent de palier à ces dilatations. L'environnement de l'échangeur est également soumis à de nombreuses vibrations. Là encore, les soufflets permettent d'absorber ces vibrations.

Ces soufflets se trouvent notamment au niveau des tuyères de sortie de la turbine et de sortie de l'échangeur pour les gaz d'échappement, ainsi qu'au niveau des volutes froide et chaude reliées respectivement aux conduites d'entrée et de sortie de l'air d'admission. De préférence, ces soufflets sont en inconel®.

Enfin, l'invention a aussi pour objet un aéronef à voilure tournante comportant au moins une turbine à gaz munie d'un échangeur selon l'invention.

L'invention et ses avantages apparaîtront avec plus de détails dans le cadre de la description qui suit avec des exemples de réalisation donnés à titre illustratif en référence aux figures annexées qui représentent :
- la figure 1, une plaque de l'échangeur,
- la figure 2, un module de l'échangeur,
- la figure 3, l'empilage de plaques dans un module,
- les figures 4 à 9, des échangeurs selon l'invention,
- la figure 10, une vue de détail d'un échangeur,
- la figure 11, une plaque munie de rondelles de rigidification, et
- les figures 12 et 13, un turbomoteur muni de l'échangeur.

Les éléments présents dans plusieurs figures distinctes sont affectés d'une seule et même référence.

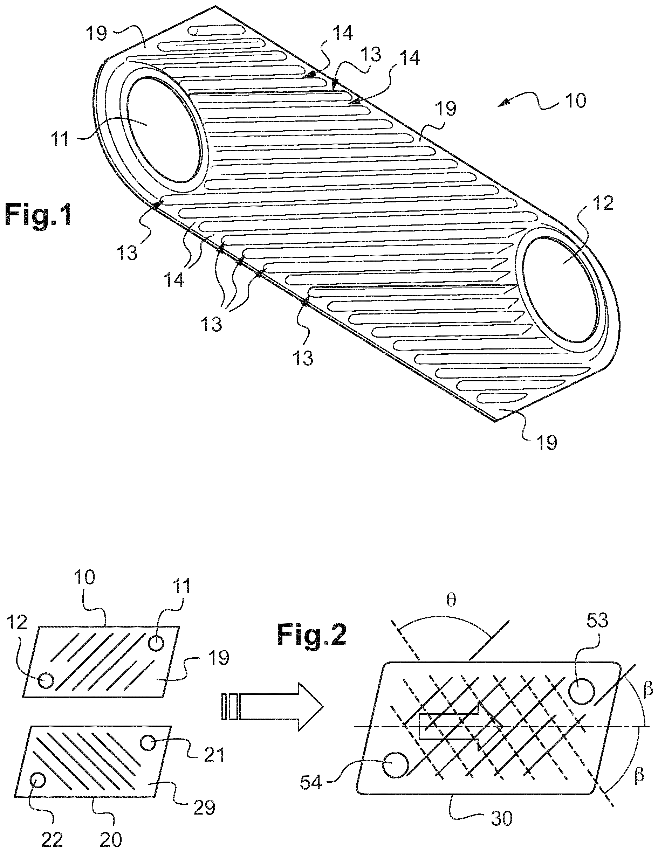

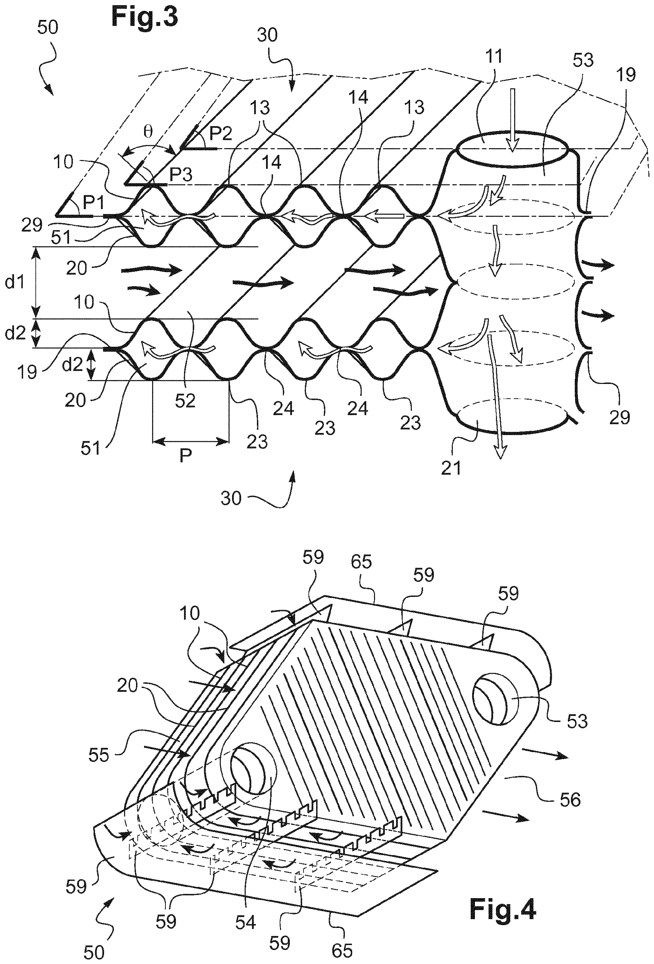

La figure 1 représente une plaque 10 comprenant une zone périphérique 19 plane et une zone interne crénelée munie d'ondulations sinusoïdales en crêtes 13 et en creux 14 parallèles entre elles. Une cheminée d'entrée 11 et une cheminée de sortie 12, placées à deux coins opposés de la plaque 10, s'élèvent de la zone périphérique 19 jusqu'à un plan supérieur P2 comme indiqué sur la figure 3.

La zone périphérique 19 forme un plan inférieur P1, dans lequel se situent les creux 14. Les ondulations en crêtes 13 se situent dans un plan intermédiaire P3, ce plan intermédiaire P3 étant positionné entre les plans inférieur P1 et supérieur P2 et parallèle à ces plans P1,P2.

Un module 30 est formé, selon la figure 2, par l'assemblage de la plaque 10 avec une plaque 20. Les crêtes 13 et les creux 14 de la première plaque 10 forment avec les crêtes 23 et les creux 24 de la seconde plaque 20 un second angle *θ* compris entre 60° et 120°.

Sur la figure 3, on peut voir les points d'appui entre les plaques 10, 20 ainsi que l'empilage des modules 30. Les plaques 10, 20 sont en appui au niveau des creux 14, 24 ainsi que sur leurs zones périphériques 19, 29. Elles sont fixées par brasure au niveau de ces points d'appui pour former les modules 30.

Ces modules 30 sont empilés les uns sur les autres pour former l'échangeur 50 selon l'invention. Ils sont en appui sur les cheminées d'entrée 11, 21 et sur les cheminées de sortie 12, 22. Les modules 30 sont assemblés par brasure au niveau de ces points d'appui.

Les cheminées d'entrée 11, 21 de chaque plaque 10, 20 sont ainsi reliées et forment une conduite d'entrée 53 de l'échangeur 50. De même, les cheminées de sortie 12, 22 forment une conduite de sortie 54.

Les crêtes 13 des plaques 10,20 de deux modules 30 adjacents sont séparées par une première distance d1 non nulle. Une seconde distance d2 correspond à la distance entre le sommet des crêtes 13 et le fond de creux 14 de chaque plaque 10,20, c'est-à-dire à la distance entre le plan inférieur P1 et le plan intermédiaire P3 d'une plaque 10,20. La hauteur total d3 d'une plaque 10,20 est la distance entre le plan inférieur P1 et le plan supérieur P2, les cheminées d'entrée 11,21 et les cheminées de sortie 12,22 s'élevant jusqu'à ce plan supérieur P2. Ces ondulations sinusoïdales ont la même période *P.*

La première distance d1 est par exemple comprise entre 2 et 3 mm alors que la seconde distance d2 est comprise entre 3 et 4mm. La période P est par exemple égale à 9mm. L'épaisseur des plaques 10,20 est comprise entre 0.1 et 0.25mm, ces plaques 10,20 pouvant être en inconel®.

Les figures 4 à 9 représentent des échangeurs thermiques 50 constitués par l'empilage des modules 30. Cet empilage est placé à l'intérieur d'un carter 60, muni de parois 65, dans lequel sont agencées une entrée 55 et une sortie 56 de l'échangeur thermique 50.

L'espace entre deux plaques 10, 20 d'un module 30 forme une première cavité. Les premières cavités 51 sont reliées par les conduites d'entrée 53 et de sortie 54. L'espace entre deux modules 30 adjacents forme une seconde cavité 52, de même que l'espace entre un module 30 extrême et une paroi 65. Une troisième cavité 58 est constituée par l'espace situé entre les zones périphériques 19 des modules 30 et les parois 65 du carter 60. Les secondes cavités 52 sont reliées entre elles notamment au niveau de l'entrée 55 et de la sortie 56 de l'échangeur 50 ainsi que par la troisième cavité 58.

Un premier fluide entre dans l'échangeur 50 par la conduite d'entrée 53 et sort de l'échangeur 50 par la conduite de sortie 54 et circule alors dans les premières cavités 51. Un second fluide entre dans l'échangeur 50 par l'entrée 55 et sort de l'échangeur 50 par la sortie 56 et circule dans les secondes cavités 52, parallèlement et de préférence en sens inverse du premier fluide. La circulation du second fluide est limitée par les parois 65 de ce carter 60. Le second fluide peut également circuler dans la troisième cavité 58.

Ainsi, les premier et second fluides traversent l'échangeur thermique 50, en assurant un échange thermique entre eux. De plus, les plaques 10, 20 ont une épaisseur suffisamment faible pour permettre un échange thermique entre le premier et le second fluide, indépendamment des capacités de conductivité thermique de ces plaques 10, 20.

Dans l'échangeur 50, les directions des creux 14,24 et des crêtes 13,23 de chaque plaque 10,20 forment un premier angle *β* avec la direction de circulation des fluides comme représenté sur la figure 2. Ce premier angle *β* est généralement constant sur une même plaque 10,20 et identique pour chaque plaque 10,20 de l'échangeur 50. Par suite, le second angle *θ* entre les creux 14,24 et les crêtes 13,23 de deux plaques 10,20 adjacentes est également généralement constant et non nul. En effet, les plaques 10,20 sont assemblées de telle façon que les directions de leurs creux 14,24 et leurs crêtes 13,23 sont sécantes afin d'avoir un bon compromis entre échange thermique et pertes de charge entre les deux fluides.

Sur la figure 4 sont représentés des peignes 59 présents dans la troisième cavité 58, entre les modules 30 et les parois 65 du carter 60. Ces peignes 59 permettent de créer des pertes de charge sur le second fluide et de l'orienter vers les secondes cavités 52.

Ces peignes 59 occupent la totalité de la hauteur entre les parois 65 du carter 60 et les modules 30 afin de faire obstacle au second fluide. La forme particulière de ces peignes 59 permet également de garantir l'espacement entre les modules 30 en périphérie de ces modules 30.

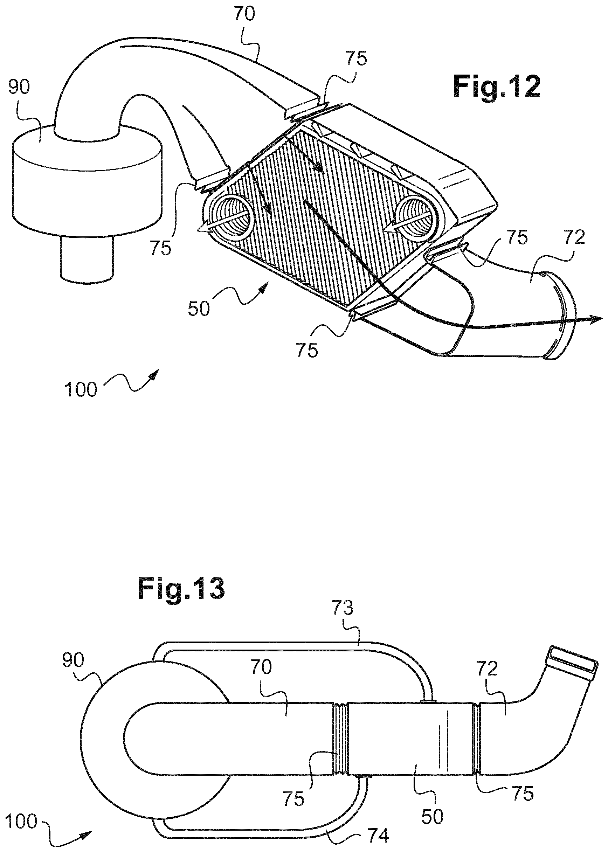

En outre, le premier fluide et le second fluide peuvent avoir des différences de températures et de pression importantes. Notamment, cet échangeur 50 peut équiper une turbine à gaz 100 motorisant par exemple un aéronef à voilure tournante, une telle turbine à gaz 100 étant représentée sur les figures 12 et 13. Le premier fluide peut alors être constitué par l'air d'admission d'une chambre de combustion 90 de la turbine à gaz 100 et le second fluide par les gaz d'échappement sortant de la chambre de combustion 90 par une tuyère intermédiaire 70. Cet air d'admission circule dans les modules 30 avec une pression élevée alors que les gaz d'échappement entrent dans l'échangeur 50 à très hautes températures.

Chaque module 30 peut alors subir des déformations importantes dues d'une part à la pression importante de l'air d'admission et d'autre part à une dilatation thermique consécutive aux différences de températures importantes entre cet air d'admission et les gaz d'échappement.

Cependant, les modules 30 étant en appui au niveau des cheminées d'entrée 11,21 et de sortie 12,22 ainsi qu'éventuellement au niveau des peignes 59 présents entre les parois 65 et les modules 30, les comportements mécaniques et thermiques de chaque module 30 sont indépendants des autres modules 30 de l'échangeur thermique 50.

De fait, les déformations d'un module 30, qui se produisent essentiellement au niveau des creux 14,24 et des crêtes 13,23, ne se propagent pas aux autres modules 30 de l'échangeur thermique 50. De même, ces déformations de chaque module 30 ne se propagent pas aux parois 65 du carter 60.

Ainsi, chaque module 30 peut se déformer librement sans générer de contrainte sur les modules 30 adjacents ou bien sur le carter 60 permettant ainsi d'améliorer la durée de vie de chaque module 30 aux cycles thermiques et de pression et, par suite, la durée de vie de l'échangeur thermique 50.

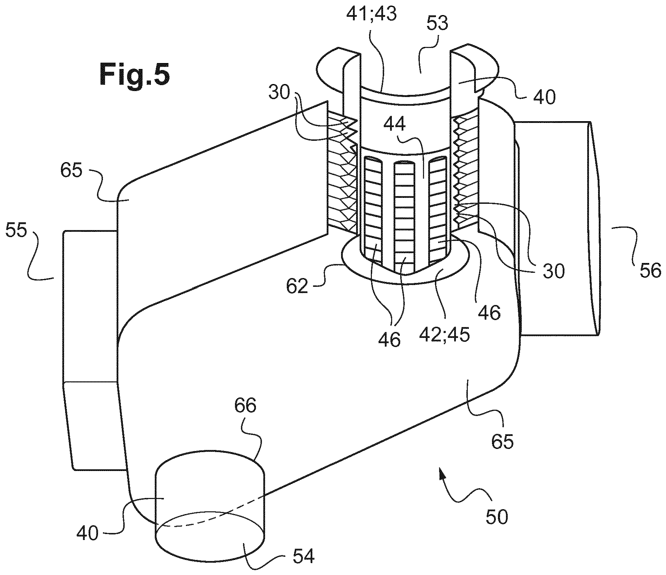

En outre, un échangeur 50 peut comporter un tirant 40 dans chaque conduite d'entrée 53 et dans chaque conduite de sortie 54, un tel échangeur 50 étant représenté sur les figures 5 à 7.

Chaque tirant 40 comporte une partie tubulaire 44 munie de plusieurs alvéoles 46, une cinquième ouverture 43 à une première extrémité 41 du tirant 40 et un fond bombé 45 à une seconde extrémité 42 du tirant 40.

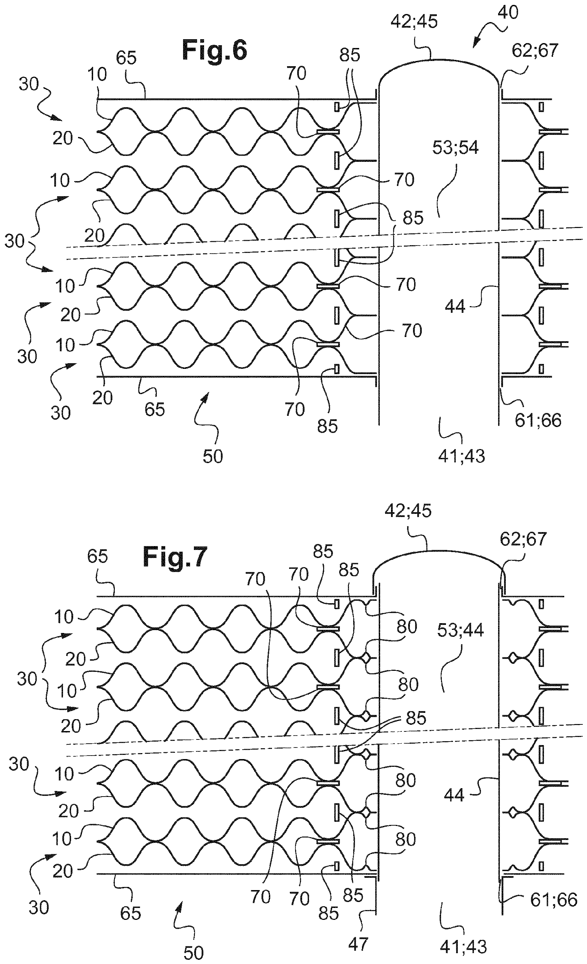

Chaque tirant 40 peut être monobloc, c'est-à-dire composé d'une seule et même pièce comme représenté sur la figure 6. Chaque tirant 40 est alors fixé à deux parois 65 du carter 60. La première extrémité 41 d'un premier tirant 40 est fixée au niveau de la première ouverture 61 d'une première paroi 65 et la seconde extrémité 42 de ce tirant 40 est fixée au niveau de la seconde ouverture 62 d'une seconde paroi 65 opposée à cette première paroi 65. De même, la première extrémité 41 d'un second tirant 40 est fixée au niveau de la troisième ouverture 66 de la seconde paroi 65 et la seconde extrémité 42 de ce second tirant 40 est fixée au niveau de la quatrième ouverture 62 de la première paroi 65 opposée. En effet, dans l'échangeur 50 représenté sur l'ensemble des figures, l'entrée du premier fluide par la conduite d'entrée 53 se fait sur une face de l'échangeur 50 qui est opposée à la sortie de ce premier par la conduite de sortie 54.

Chaque tirant 40 peut également être composé de plusieurs pièces comme représenté sur la figure 7 afin notamment de faciliter sa fabrication et/ou son assemblage sur les parois 65 du carter 60. Chaque tirant 40 comporte alors trois composants, une partie tubulaire 44 munie de plusieurs alvéoles 46, un fond bombé 45 et une bride 47 comportant la cinquième ouverture 43. La bride 47 est fixée à une paroi 65 au niveau de la première ouverture 61 ou de la troisième ouverture 66 selon que le tirant 40 est situé dans la conduite d'entrée 53 ou de sortie 54. Le fond bombé 45 est fixé à une autre paroi 65 au niveau de la seconde ouverture 62 ou de la quatrième ouverture 67. La bride 47 est d'une section cylindrique équivalente à la partie tubulaire 44, cette partie tubulaire 44 étant fixée d'une part à la bride 47 et d'autre part à une paroi 65 au niveau de la seconde ouverture 62 ou de la quatrième ouverture 66, à proximité du fond bombé 45.

Chaque tirant 40 ou bien chaque composant 44,45,47 de ce tirant 40 le cas échéant peut être fixé par soudure et de préférence par brasure aux parois 65, assurant ainsi d'une part une étanchéité entre l'intérieur et l'extérieur de l'échangeur thermique 50 et d'autre part la tenue mécanique de cet échangeur thermique 50. Les parois 65 peuvent comporter des bords tombés au niveau des première et seconde ouvertures 61,62 afin de faciliter cet assemblage. Par contre, la partie tubulaire 44 du tirant 40 n'est fixée à aucune plaque 10,20 formant les modules 30 de l'échangeur thermique 50.

De fait, les contraintes mécaniques subies par ce tirant 40, sous l'effet essentiellement de la pression statique du premier fluide circulant dans les conduites d'entrée 53 et de sortie 54 et, par suite, dans les tirant 40, ne sont pas transmises aux modules 30, mais directement aux parois 65 du carter 60. De plus, les alvéoles 46 situées face aux premières cavités 51 permettent la circulation du premier fluide entre les conduites d'entrée 53 et de sortie 54 et les premières cavités 51.

Le fond bombé 45 du tirant 40 a la forme d'une demi-sphère aplatie afin de limiter son encombrement.

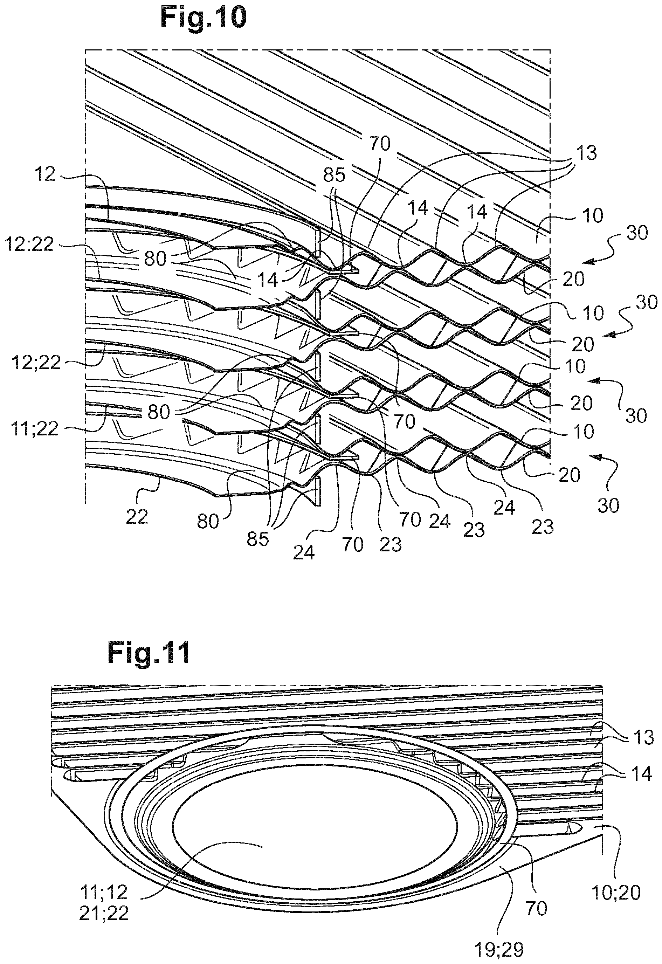

De plus, l'échangeur thermique 50 représenté sur les figures 6 et 7 comporte également une rondelle de rigidification 70 afin de permettre à chaque module 30 de l'échangeur 50 de résister à la pression du premier fluide. Cette rondelle de rigidification 70 est fixée à l'intérieur de chaque module 30, entre deux plaques 10,20 par exemple par soudure et de préférence par brasure. Cette rondelle de rigidification 70 est fixée au niveau des creux de ces plaques 10,20 autour d'une cheminée d'entrée 11,21 et d'une cheminée de sortie 12,22 et à proximité de ces cheminées 11,12,21,22 et au niveau de la zone périphérique 19,29 de ces plaques 10,20, comme représenté sur la figure 11. Cette rondelle de rigidification 70 peut également avoir la forme d'un arc de cercle et être fixée uniquement au niveau des creux 14,24 situés autour d'une cheminée d'entrée 11,21 ou d'une cheminée de sortie 12,22 afin de suivre la forme circulaire de ces cheminées 11,12,21,22.

Cette rondelle de rigidification 70 augmente la surface de contact et de liaison entre les deux plaques 10,20 constituant un module 30 et renforce ainsi la tenue de chaque module 30 à la pression du premier fluide.

Cette rondelle de rigidification 70 a une faible épaisseur, équivalente à celle des plaques 10,20. Cette rondelle de rigidification 70 est constituée du même matériau que les plaques 10,20.

Par ailleurs, comme représenté sur la figure 10, les creux 14,24 ont localement une profondeur réduite permettant de positionner la rondelle de rigidification 70 entre les deux plaques 10,20 tout en permettant la réalisation des autres points de fixation entre ces deux plaques 10,20.

L'échangeur thermique 50 représenté sur les figures 6 et 7 comporte également des zones flexibles 80 intégrées à proximité et autour de chaque cheminée d'entrée 11,21 et de chaque cheminée de sortie 12,22 des plaques 10,20 sur chacune des plaques 10,20. Cette zone flexible 80 démarre sur le plan supérieur P2 et est située entre le plan supérieur P2 et le plan inférieur P1 de chaque plaque 10,20. Cette zone flexible 80 comporte une seule vague circulaire comme représenté sur la figure 10 positionnée autour des cheminées de sortie 12,22.

Cette vague de la zone flexible 80 a la forme d'une demi-période d'une onde sinusoïdale. Cette vague a une hauteur comprise entre 1 et 2mm et une largeur comprise entre 2 et 3mm.

Ces zones flexibles 80 permettent à deux modules adjacents 30 de se déformer indépendamment l'un de l'autre par exemple par dilatation. Ces zones flexibles 80 permettent également à chaque conduite d'entrée 53 et chaque conduite de sortie 54 de se déformer radialement sans introduire de contraintes mécaniques importantes au niveau des plaques 10,20 et des modules 30.

L'échangeur thermique 50 représenté sur les figures 6 et 7 comporte également des écrans de protection 85. Un écran de protection 85 est positionné entre chaque couple de modules 30, autour des cheminées d'entrée 11,21 et des cheminées de sortie 12,22, entre les crêtes 14,24 des deux plaques 10,20 adjacentes de deux modules 30 adjacents. Un écran de protection 85 est également positionné entre un module 30 extrême et une paroi 65 du carter 60, autour des cheminées d'entrée 11,21 et des cheminées de sortie 12,22, entre cette paroi 65 et les crêtes 14,24 de la plaque 10,20 de ce module 30.

Ces écrans de protection 85 sont des tubes de section circulaire positionnés concentriquement et respectivement autour de chaque cheminée de sortie 12,22. Cet écran de protection 85 est de la même matière que les plaques 10,20 et de même épaisseur. La hauteur de cet écran de protection 85 est par exemple comprise entre 5 et 10mm.

Les écrans de protection 85 protègent ainsi les cheminées d'entrée 11,21 et les cheminée de sortie 12,22 ainsi que la liaison entre deux modules 30 adjacents d'un contact direct avec le flux du second fluide entrant dans l'échangeur 50 par l'entrée 55.

De fait, cet écran de protection 85 peut également être constitué par un demi-tube afin de protéger la partie exposée de chaque cheminée d'entrée 11,21 et de chaque cheminée de sortie 12,22 de ce flux du second fluide circulant dans l'échangeur 50.

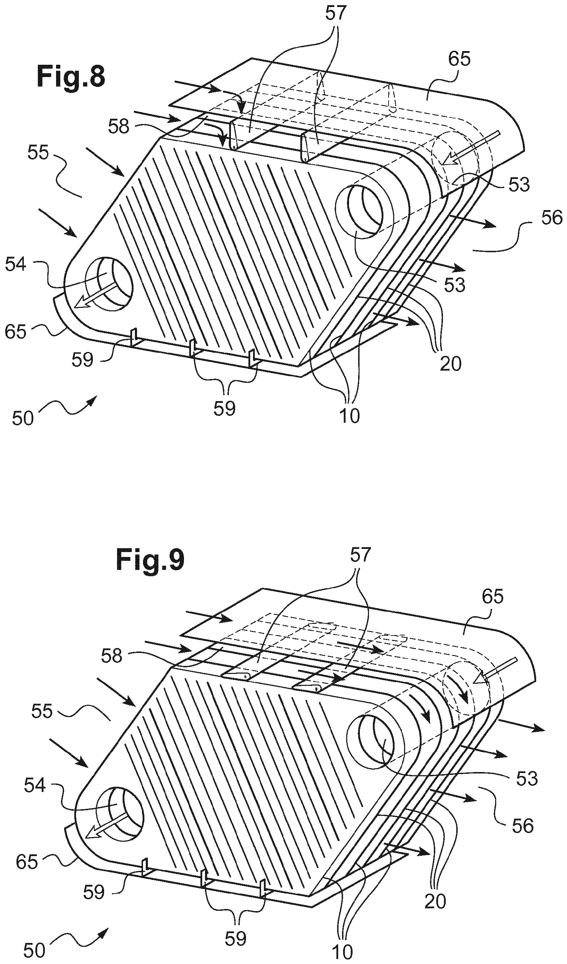

Sur les figures 8 et 9, l'échangeur thermique 50 comporte des volets 57 mobiles positionnés dans la troisième cavité 58 entre les modules 30 et une paroi 65 du carter 60, en périphérie de ces modules 30. Des peignes 59 sont présents entre une autre paroi 65 du carter 60, à l'opposé de ces volets 57, afin d'orienter le second fluide entre les modules 30.

Sur la figure 8, le second fluide ne peut pas traverser la troisième cavité 58, qui est fermée par les volets 57 et les peignes 59, ces volets 57 et ces peignes 59 orientant le second fluide entre les modules 30, c'est-à-dire les secondes cavités 52.

Sur la figure 9, les volets 57 sont ouverts et la troisième cavité 58 est accessible par le second fluide. En effet, cette troisième cavité 58 est libre, c'est-à-dire sans obstacle. De fait, cette troisième cavité 58 ne crée que très peu de pertes de charge sur le second fluide. La circulation dans la troisième cavité 58 est alors plus simple pour le second fluide que la circulation entre les modules 30, qui génère des pertes de charge. Par suite, le second fluide passera naturellement et essentiellement par la troisième cavité 58 au lieu de passer entre les modules 30.

En conséquence, lorsque les volets 57 sont ouverts, le second fluide traverse l'échangeur 50 en passant essentiellement par la troisième cavité 58 où il ne subit que très peu de pertes de charge.

Cette fonction est utile lors de l'application d'un tel échangeur 50 à une turbine à gaz 100 telle que représentée sur les figures 12 et 13.

En effet, dans ce cas, le premier fluide est constitué par l'air d'admission d'une chambre de combustion 90 de la turbine à gaz 100 et le second fluide par les gaz d'échappement sortant de la chambre de combustion 90 par une tuyère intermédiaire 70.

Lorsque les gaz d'échappement traversent les secondes cavités 52 de l'échangeur 50, ils réchauffent l'air d'admission qui traverse également l'échangeur 50 à travers les premières cavités 51. Ceci permet de réduire la consommation de carburant de la turbine à gaz 100, l'air d'admission ayant été réchauffé avant son injection dans la chambre de combustion 90. Par contre, les gaz d'échappement peuvent subir des pertes de charge en traversant les secondes cavités 52, avant de sortir de l'échangeur par une tuyère de sortie 72. Ces pertes de charge affectent directement les performances de la turbine à gaz 100 dont la puissance est diminuée.

Pour éviter cette diminution de puissance, il faut réduire ou supprimer si possible les pertes de charge des gaz d'échappement. Pour cela, les gaz d'échappement traversent la troisième cavité 58 de l'échangeur 50. Dans ce cas, l'air d'admission n'est pas réchauffé, la consommation de carburant n'est alors pas réduite. Par contre, les gaz d'échappement subissent très peu de pertes de charge, la turbine à gaz 100 fonctionne alors à puissance maximum.

Le basculement entre les deux modes de fonctionnement, c'est-à-dire consommation réduite et puissance réduite à consommation normale et pleine puissance, s'obtient en pilotant les volets 57 de la position fermée à la position ouverte par l'intermédiaire de moyens de déplacement. Ces moyens de déplacement sont intégrés à l'échangeur ou bien à la turbine à gaz.

Sur la figure 13, une vue de dessus de la turbine à gaz 100 est représentée. Une volute froide 73 permet à l'air d'admission de circuler d'un compresseur de la turbine à gaz 100 vers la conduite d'entrée 53. Une volute chaude 74 permet à l'air d'admission de circuler de la conduite de sortie 54 vers la chambre de combustion 90 de la turbine à gaz 100.

On peut également voir sur la figure 10 que l'échangeur 50 est positionné entre les tuyères 70,72. Afin de résister aux contraintes thermiques et mécaniques, notamment en absorbant les dilatations et les vibrations, tout en assurant l'étanchéité nécessaire au bon fonctionnement de l'échangeur 50, des soufflets métalliques 75 sont agencés à la jonction entre l'échangeur 50 et les différents éléments de la turbine à gaz 100. Ces soufflets 75 se trouvent notamment au niveau de la tuyère intermédiaire 70 et de la tuyère de sortie 72. De tels soufflets 75 peuvent également être utilisés au niveau des conduites d'entrée 53 et de sortie 54 d'air d'admission en liaison avec les volutes froide 73 et chaude 74.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention. Notamment, la forme des creux et de crêtes des plaques peuvent être de différentes formes.

Notamment, les creux 14,24 et les crêtes 13,23 des plaques 10,20 qui ont la forme d'ondes sinusoïdales sur l'ensemble des figures peuvent avoir d'autres formes telles que des créneaux rectangulaires ou bien de formes trapézoïdales. De même, ces creux 14,24 et les crêtes 13,23 des plaques 10,20 qui sont selon une seule direction droite sur l'ensemble des figures peuvent être selon plusieurs directions sécantes sur l'ensemble de cette plaque. Par exemple, ces creux 14,24 et les crêtes 13,23 peuvent avoir la forme de chevrons ou bien de créneaux.

## Revendications

1. Echangeur thermique à plaques (50) comportant,
- une pluralité de modules (30) formés de deux plaques (10,20) en métal, chaque plaque (10,20) comportant une zone périphérique (19,29), au moins une cheminée d'entrée (11,21), au moins une cheminée de sortie (12,22) et une zone interne crénelée comportant des crêtes (13,23) et des creux (14,24), lesdits creux (14,24) et ladite zone périphérique se situant dans un plan inférieur (P1), lesdites cheminées d'entrée (11,21) et lesdites cheminées de sortie (12,22) s'élevant de ladite zone périphérique (19,29) jusqu'à un plan supérieur (P2) parallèle audit plan inférieur (P1), lesdites crêtes (13,23) se situant dans un plan intermédiaire (P3) parallèle auxdits plans (P1,P2) et positionné entre lesdits plans (P1,P2), deux plaques (10,20) constituant un module (30) étant en appui d'une part au niveau desdites zones périphériques (19,29) et d'autre part au niveau des points d'appui desdits creux (14,24), au moins une conduite d'entrée (53) étant formée par lesdites cheminées d'entrée (11,21) de chaque plaque (10,20) et au moins une conduite de sortie (54) étant formée par lesdites cheminées de sortie (12,22) de chaque plaque (10,20), les directions desdits creux (14,24) et desdites crêtes (13,23) de chaque plaque (10,20) formant un premier angle *β* avec la direction de circulation des fluides circulant dans ledit échangeur (50), les directions desdits creux (14,24) et desdites crêtes (13,23) de deux plaques (10, 20) adjacentes formant un second angle *θ* non nul entre elles, lesdits modules (30) étant empilés de telle sorte que deux modules (30) adjacents sont en appui au niveau desdites cheminées d'entrée (11,21) et desdites cheminées de sortie (12,22), une première distance non nulle séparant lesdites crêtes (13,23) desdites deux plaques (10,20) adjacentes de deux modules (30) adjacents,
- un carter (60) muni de parois (65) à l'intérieur duquel sont logés lesdits modules (30), une entrée (55) et une sortie (56) dudit échangeur (50) étant agencées dans ledit carter (60),
- une première cavité (51) constituée par l'espace intérieur de chaque module (30), un premier fluide pouvant circuler dans lesdites premières cavités (51) entre chaque conduite d'entrée (53) et chaque conduite de sortie (54),
- une seconde cavité (52) constituée par l'espace situé entre deux modules (30) adjacents et par l'espace entre chaque module (30) extrême et une paroi (65) dudit carter (60), un second fluide pouvant circuler dans lesdites secondes cavités (52) entre une entrée (55) et une sortie (56) dudit échangeur (50), et
- une troisième cavité (58) constituée par l'espace situé entre lesdites zones périphériques (19,29) desdits modules (30) et lesdites parois (65),
**caractérisé en ce que** une zone flexible (80) est intégrée autour de chaque cheminée d'entrée (11,21) ou bien de chaque cheminée de sortie (12,22), ladite zone flexible (80) comportant au moins une vague radiale démarrant sur ledit plan supérieur (P2) et étant comprise entre ledit plan supérieur (P2) et ledit plan inférieur (P1).

2. Echangeur thermique (50) selon la revendication 1,
**caractérisé en ce qu'**une rondelle de rigidification (70) est positionnée dans chaque module (30) en périphérie de chaque conduite d'entrée (53) et de sortie (54), ladite rondelle de rigidification (70) étant fixée auxdits creux (14,24) desdites deux plaques (10,20) constituant ledit module (30).

3. Echangeur thermique (50) selon l'une quelconque des revendications 1 à 2,
**caractérisé en ce que** lesdits creux (14,24) ont localement une hauteur réduite permettant de positionner ladite rondelle de rigidification (70) entre lesdites deux plaques (10,20) constituant ledit module (30).

4. Echangeur thermique (50) selon l'une quelconque des revendications 1 à 3,
**caractérisé en ce qu'**une première ouverture (61) et une seconde ouverture (62) étant respectivement agencées dans deux desdites parois (65) pour chaque conduite d'entrée (53), une troisième ouverture (66) et une quatrième ouverture (67) étant respectivement agencées dans deux desdites parois (65) pour chaque conduite de sortie (54), un tirant (40) est situé dans chaque conduite d'entrée (53) et dans chaque conduite de sortie (54), ledit tirant (40) comportant une partie tubulaire (44), une cinquième ouverture (43) à une première extrémité (41) dudit tirant (40) et un fond bombé (45) à une seconde extrémité (42) dudit tirant (40), ladite première extrémité (41) de chaque tirant (41) étant fixée à une desdites parois (65) au niveau de ladite première ouverture (61) ou de ladite troisième ouverture (66) et ladite seconde extrémité (42) de chaque tirant (40) étant fixée à une autre desdites parois (65) au niveau de ladite seconde ouverture (62) ou de ladite quatrième ouverture (67), ledit tirant (40) comportant plusieurs alvéoles (46) sur ladite partie tubulaire (44) afin de permettre la circulation dudit premier fluide entre d'une part ladite conduite d'entrée (53) ou ladite conduite de sortie (54) et d'autre part lesdites premières cavités (51).

5. Echangeur thermique (50) selon la revendication 4,
**caractérisé en ce que** ledit tirant (40) comporte au moins trois composants, une partie tubulaire (44), une bride (47) comportant une cinquième ouverture (43) et un fond bombé (45), ladite bride (47) étant fixée à une desdites parois (65) au niveau de ladite première ouverture (61) ou de ladite troisième ouverture (66) et ledit fond bombé (45) étant fixé à une autre desdites parois (65) au niveau de ladite seconde ouverture (62) ou de ladite quatrième ouverture (67), ladite partie tubulaire (44) étant fixée à ladite paroi au niveau de la ladite seconde ouverture (62) ou de ladite quatrième ouverture (67) et à ladite bride (47), ladite partie tubulaire (44) comportant plusieurs alvéoles (46) afin de permettre la circulation dudit premier fluide entre d'une part ladite conduite d'entrée (53) ou ladite conduite de sortie (54) et d'autre part lesdites premières cavités (51).

6. Echangeur thermique (50) selon l'une quelconque des revendications 4 à 5,
**caractérisé en ce que** ledit fond bombé (45) de chaque tirant (40) est de forme quasi-sphérique.

7. Echangeur thermique (50) selon l'une quelconque des revendications 1 à 6,
**caractérisé en ce qu'**un écran de protection (85) est positionné entre deux modules (30) autour de chaque cheminée d'entrée (11,21) et/ou de chaque cheminée de sortie (12,22).

8. Echangeur thermique (50) selon la revendication 7,
**caractérisé en ce que** ledit écran de protection (85) est situé entre chaque plan inférieur (P1) desdites deux plaques (10,20) adjacentes de deux modules (30) adjacents.

9. Echangeur thermique (50) selon l'une quelconque des revendications 7 à 8,
**caractérisé en ce que** ledit écran de protection (85) est un tube de section circulaire.

10. Echangeur thermique (50) selon l'une quelconque des revendications 7 à 8,
**caractérisé en ce que** ledit écran de protection (85) est un demi-tube de section circulaire.

11. Turbine à gaz (100), **caractérisée en ce qu'**elle comporte un échangeur thermique à plaques (50) selon l'une quelconque des revendications 1 à 10.

12. Turbine à gaz (100) selon la revendication 11, **caractérisée en ce que** ledit premier fluide est l'air comprimé alimentant une chambre de combustion (90) de ladite turbine (100) et ledit second fluide est constitué par les gaz d'échappement sortant de ladite chambre de combustion (90), ladite turbine à gaz comportant au moins une volute froide (73) permettant audit air d'admission de circuler d'un compresseur de ladite turbine (100) vers ladite conduite d'entrée (53), au moins une volute chaude (74) permettant audit air d'admission de circuler de ladite conduite de sortie (54) vers ladite chambre de combustion (90), au moins une tuyère intermédiaire (70) permettant de diriger lesdits gaz d'échappement de ladite chambre de combustion (90) vers ladite entrée (55) dudit échangeur (50) et au moins une tuyère de sortie (72) permettant de diriger lesdits gaz d'échappement après leur sortie par ladite sortie (56) dudit échangeur (50).

13. Aéronef à voilure tournante,
**caractérisé en ce que** ledit aéronef comporte au moins une turbine à gaz (100) selon l'une quelconque des revendications 11 à 12.

## Patentansprüche

1. Plattenwärmetauscher (50), umfassend
- eine Mehrzahl von Modulen (30), die aus zwei Metallplatten (10, 20) gebildet sind, wobei jede Platte (10, 20) einen Umfangsbereich (19, 29), mindestens einen Einlassschacht (11, 21), mindestens einen Auslassschacht (12, 22) und einen inneren gerippten Bereich mit Kämmen (13, 23) und Rinnen (14, 24) aufweist, wobei die Rinnen (14, 24) und der Umfangsbereich in einer unteren Ebene (P1) angeordnet sind, der Einlassschacht (11, 21) und der Auslassschacht (12, 22) von dem Umfangsbereich (19, 29) zu einer zu der unteren Ebene (P1) parallelen oberen Ebene (P2) ansteigen, die Kämme (13, 23) in einer Zwischenebene (P3) angeordnet sind, die parallel zu den Ebenen (P1, P2) und zwischen den Ebenen (P1, P2) liegt, wobei zwei Platten (10, 20), die ein Modul (30) bilden, einerseits an den Umfangsbereichen (19, 29) und andererseits an den Auflagepunkten der Rinnen (14, 24) abgestützt sind, mindestens eine Einlassleitung (53) durch die Einlassschächte (11, 21) jeder Platte (10, 20) und mindestens eine Auslassleitung (54) durch die Auslassschächte (12, 22) jeder Platte (10, 20) gebildet ist, wobei die Richtungen der Rinnen (14, 24) und der Kämme (13, 23) jeder Platte (10, 20) einen ersten Winkel β mit der Strömungsrichtung der in dem Wärmetauscher (50) strömenden Fluide bilden, die Richtungen der Rinnen (14, 24) und der Kämme (13, 23) von zwei benachbarten Platten (10, 20) untereinander einen zweiten Winkel θ ungleich Null bilden, wobei die Module (30) so gestapelt sind, dass zwei benachbarte Module (30) an den Einlassschächten (11, 21) und den Auslassschächten (12, 22) aufeinander liegen, wobei ein erster nichtverschwindender Abstand die Kämme (13, 23) der beiden benachbarten Platten (10, 20) von zwei benachbarten Modulen (30) voneinander trennt,
- ein Gehäuse (60), das mit Wänden (65) versehen ist und in dem die Module (30) untergebracht sind, wobei ein Einlass (55) und ein Auslass (56) des Wärmetauschers (50) in dem Gehäuse (60) vorgesehen sind,
- einen ersten Hohlraum (51), der durch den Innenraum jedes Moduls (30) gebildet ist, wobei ein erstes Fluid in den ersten Hohlräumen (51) zwischen jeder Eingangsleitung (53) und jeder Ausgangsleitung (54) strömen kann,
- einen zweiten Hohlraum (52), der durch den Raum zwischen zwei benachbarten Modulen (30) und den Raum zwischen jedem äußeren Modul (30) und einer Wand (65) des Gehäuses (60) gebildet ist, wobei ein zweites Fluid in den zweiten Hohlräumen (52) zwischen einem Einlass (55) und einem Auslass (56) des Wärmetauschers (50) strömen kann, und
- einen dritten Hohlraum (58), der durch den Raum zwischen den Umfangsbereichen (19, 29) der Module (30) und den Wänden (65) gebildet ist,
**dadurch gekennzeichnet, dass** um jeden Einlassschacht (11, 21) oder jeden Auslassschacht (12, 22) eine flexible Zone (80) integriert ist, wobei die flexible Zone (80) mindestens eine radiale Welle aufweist, die auf der oberen Ebene (P2) beginnt und zwischen der oberen Ebene (P2) und der unteren Ebene (P1) liegt.

2. Wärmetauscher (50) nach Anspruch 1,
**dadurch gekennzeichnet, dass** eine Versteifungsscheibe (70) in jedem Modul (30) um jede Einlass- (53) und Auslassleitung (54) herum angeordnet ist, wobei die Versteifungsscheibe (70) an den Rinnen (14, 24) der beiden das Modul (30) bildenden Platten (10, 20) befestigt ist.

3. Wärmetauscher (50) nach einem der Ansprüche 1 bis 2,
**dadurch gekennzeichnet, dass** die Rinnen (14, 24) eine lokal reduzierte Höhe aufweisen, die es ermöglicht, die Versteifungsscheibe (70) zwischen den beiden das Modul (30) bildenden Platten (10, 20) zu positionieren.

4. Wärmetauscher (50) nach einem der Ansprüche 1 bis 3,
**dadurch gekennzeichnet, dass** eine erste Öffnung (61) und eine zweite Öffnung (62) in zwei der Wände (65) für jede Einlassleitung (53) und eine dritte Öffnung (66) und eine vierte Öffnung (67) in zwei der Wände (65) für jede Auslassleitung (54) angeordnet sind, ein Zuganker (40) in jeder Einlassleitung (53) und in jeder Auslassleitung (54) angeordnet ist, wobei der Zuganker (40) einen Rohrabschnitt (44), eine fünfte Öffnung (43) an einem ersten Ende (41) des Zugankers (40) und einen gewölbten Boden (45) an einem zweiten Ende (42) des Zugankers (40) aufweist, das erste Ende (41) jedes Zugankers (41) an einer der Wände (65) an der ersten Öffnung (61) oder der dritten Öffnung (66) befestigt ist und das zweite Ende (42) jedes Zugankers (40) an einer anderen der Wände (65) an der zweiten Öffnung (62) oder der vierten Öffnung (67) befestigt ist, und der Zuganker (40) eine Mehrzahl von Zellen (46) auf dem Rohrabschnitt (44) aufweist, um zu ermöglichen, dass das erste Fluid zwischen der Einlassleitung (53) oder der Auslassleitung (54) einerseits und den ersten Hohlräumen (51) andererseits fließt.

5. Wärmetauscher (50) nach Anspruch 4,
**dadurch gekennzeichnet, dass** der Zuganker (40) mindestens drei Komponenten, einen rohrförmigen Abschnitt (44), einen Flansch (47) mit einer fünften Öffnung (43) und einen gewölbten Boden (45) aufweist, wobei der Flansch (47) an einer der Wände (65) an der ersten Öffnung (61) oder der dritten Öffnung (66) befestigt ist und der gewölbte Boden (45) an einer weiteren der Wände (65) an der zweiten Öffnung (62) oder der vierten Öffnung (67) befestigt ist, wobei der rohrförmige Abschnitt (44) an der Wand an der zweiten Öffnung (62) oder der vierten Öffnung (67) und dem Flansch (47) befestigt ist, wobei der rohrförmige Abschnitt (44) eine Mehrzahl von Zellen (46) aufweist, damit das erste Fluid zwischen der Einlassleitung (53) oder der Auslassleitung (54) einerseits und den ersten Hohlräumen (51) andererseits fließen kann.

6. Wärmetauscher (50) nach einem der Ansprüche 4 bis 5,
**dadurch gekennzeichnet, dass** der gewölbte Boden (45) jeder Zugstange (40) eine quasi-sphärische Form aufweist.

7. Wärmetauscher (50) nach einem der Ansprüche 1 bis 6,
**dadurch gekennzeichnet, dass** ein Schutzschirm (85) zwischen zwei Modulen (30) um jeden Einlassschacht (11, 21) und/oder jeden Auslassschacht (12, 22) angeordnet ist.

8. Wärmetauscher (50) nach Anspruch 7,
**dadurch gekennzeichnet, dass** der Schutzschirm (85) zwischen jeder unteren Ebene (P1) der beiden benachbarten Platten (10, 20) von zwei benachbarten Modulen (30) angeordnet ist.

9. Wärmetauscher (50) nach einem der Ansprüche 7 bis 8,
**dadurch gekennzeichnet, dass** der Schutzschirm (85) ein Rohr mit kreisförmigem Querschnitt ist.

10. Wärmetauscher (50) nach einem der Ansprüche 7 bis 8,
**dadurch gekennzeichnet, dass** der Schutzschirm (85) ein Halbrohr mit kreisförmigem Querschnitt ist.

11. Gasturbine (100),
**dadurch gekennzeichnet, dass** sie einen Plattenwärmetauscher (50) nach einem der Ansprüche 1 bis 10 umfasst.

12. Gasturbine (100) nach Anspruch 11, **dadurch gekennzeichnet, dass** das erste Fluid Druckluft ist, die eine Brennkammer (90) der Turbine (100) versorgt, und das zweite Fluid durch die Abgase gebildet ist, die die Brennkammer (90) verlassen, wobei die Gasturbine mindestens einen kalten Krümmer (73), der es der Ansaugluft ermöglicht, von einem Verdichter der Turbine (100) zu der Ansaugleitung (53) zu strömen, mindestens einen heißen Krümmer (74), der es der Ansaugluft ermöglicht, von dem Auslasskanal (54) zu der Brennkammer (90) zu strömen, mindestens eine Zwischendüse (70) zum Leiten der Abgase aus der Brennkammer (90) zu dem Einlass (55) des Wärmetauschers (50) und mindestens eine Auslassdüse (72) zum Leiten der Abgase nach ihrem Austritt durch den Auslass (56) des Wärmetauschers (50) umfasst.

13. Drehflügelflugzeug,
**dadurch gekennzeichnet, dass** es mindestens eine Gasturbine (100) nach einem der Ansprüche 11 bis 12 umfasst.

## Claims

1. Plate heat exchanger (50) comprising
- a plurality of modules (30) formed of two metal plates (10, 20), each plate comprising a peripheral zone (19, 29), at least one inlet funnel (11, 21), at least one outlet funnel (12, 22) and an inner serrated zone comprising ridges (13, 23) and cavities (14, 24), said cavities (14, 24) and said peripheral zone being located in a lower plane (P1), said inlet funnels (11, 21) and said outlet funnels (12, 22) raising from said peripheral zone (19, 29) to an upper plane (P2) parallel to said lower plane (P1), said ridges (13, 23) being located in an intermediate plane (P3) parallel to said planes (P1, P2) and positioned between said planes (P1, P2), two plates (10, 20) constituting a module (30) bearing, on the one hand, at the level of said peripheral zones (19, 29) and on the other hand, at the level of the bearing points of said cavities (14, 24), at least one inlet conduit (53) being formed by said inlet funnels (11, 21) of each plate (10, 20) and at least one outlet conduit (54) being formed by said outlet funnels (12, 22) of each plate (10, 20), the directions of said cavities (14, 24) and of said ridges (13, 23) of each plate (10, 20) forming a first angle *β* with the circulation direction of the fluids circulating in said exchanger (50), the directions of said cavities (14, 24) and of said ridges (13, 23) of two adjacent plates (10, 20) forming a second non-zero angle *θ* between them, said modules (30) being stacked such that two adjacent modules (30) bear at the level of said inlet funnels (11, 21) and said outlet funnels (12, 22), a first non-zero distance separating said ridges (13, 23) of said two adjacent plates (10, 20) of two adjacent modules (30),
- a casing (60) equipped with walls (65) inside which are housed said modules (30), an inlet (55) and an outlet (56) of said exchanger (50) being arranged in said casing (60),
- a first cavity (51) constituted by the inner space of each module (30), a first fluid being able to circulate in said first cavities (51) between each inlet conduit (53) and each outlet conduit (54),
- a second cavity (52) constituted by the space located between two adjacent modules (30) and by the space between each extreme module (30) and a wall (65) of said casing (60), a second fluid being able to circulate in said second cavities (52) between an inlet (55) and an outlet (56) of said exchanger (50), and
- a third cavity (58) constituted by the space located between said peripheral zones (19, 29) of said modules (30) and said walls (65),
**characterised in that** a flexible zone (80) is integrated around each inlet funnel (11, 21) or each outlet funnel (12, 22), said flexible zone (80) comprising at least one radial wave starting on said upper plane (P2) and being between said upper plane (P2) and said lower plane (P1).

2. Heat exchanger (50) according to claim 1, **characterised in that** a rigidifying washer (70) is positioned in each module (30) at the periphery of each inlet conduit (53) and outlet conduit (54), said rigidifying washer (70) being fixed to said cavities (14, 24) of said two plates (10, 20) constituting said module (30).

3. Heat exchanger (50) according to any one of claims 1 to 2, **characterised in that** said cavities (14, 24) have locally a reduced height making it possible to position said rigidifying washer (70) between said two plates (10, 20) constituting said module (30).

4. Heat exchanger (50) according to any one of claims 1 to 3, **characterised in that** a first opening (61) and a second opening (62) being respectively arranged in two of said walls (65) for each inlet conduit (53), a third opening (66) and a fourth opening (67) being respectively arranged in two of said walls (65) for each outlet conduit (54), an anchor (40) is located in each inlet conduit (53) and in each outlet conduit (54), said anchor (40) comprising a tubular portion (44), a fifth opening (43) at a first end (41) of said anchor (40) and a curved bottom (45) at a second end (42) of said anchor (40), said first end (41) of each anchor (41) being fixed to one of said walls (65) at the level of said first opening (61) or of said third opening (66) and said second end (42) of each anchor (40) being fixed to another of said walls (65) at the level of said second opening (62) or of said fourth opening (67), said anchor (40) comprising several air cells (46) on said tubular portion (44) in order to make it possible for the circulation of said first fluid between, on the one hand, said inlet conduit (53) or said outlet conduit (54) and, on the other hand, said first cavities (51).

5. Heat exchanger (50) according to claim 4, **characterised in that** said anchor (40) comprises at least three components, a tubular portion (44), a flange (47) comprising a fifth opening (43) and a curved bottom (45), said flange (47) being fixed to one of said walls (65) at the level of said first opening (61) or of said third opening (66) and said curved bottom (45) being fixed to another of said walls (65) at the level of said second opening (62) or of said fourth opening (67), said tubular portion (44) being fixed to said wall at the level of said second opening (62) or of said fourth opening (67) and to said flange (47), said tubular portion (44) comprising several air cells (46) in order to make it possible for the circulation of said first fluid between, on the one hand, said inlet conduit (53) or said outlet conduit (54) and, on the other hand, said first cavities (51).

6. Heat exchanger (50) according to any one of claims 4 to 5, **characterised in that** said curved bottom (45) of each anchor (40) is almost spherical-shaped.

7. Heat exchanger (50) according to any one of claims 1 to 6, **characterised in that** a protective screen (85) is positioned between two modules (30) around each inlet funnel (11, 21) and/or each outlet funnel (12, 22).

8. Heat exchanger (50) according to claim 7, **characterised in that** said protective screen (85) is located between each lower plane (P1) of said two adjacent plates (10, 20) of two adjacent modules (30).

9. Heat exchanger (50) according to any one of claims 7 to 8, **characterised in that** said protective screen (85) is a tube with a circular section.

10. Heat exchanger (50) according to any one of claims 7 to 8, **characterised in that** said protective screen (85) is a half-tube with a circular section.

11. Gas turbine (100), **characterised in that** it comprises a plate heat exchanger (50) according to any one of claims 1 to 10.

12. Gas turbine (100) according to claim 11, **characterised in that** said first fluid is compressed air supplying a combustion chamber (90) of said turbine (100) and said second fluid is constituted by exhaust gases exiting said combustion chamber (90), said gas turbine comprising at least one cold volute (73) making it possible for said inlet air to circulate from a compressor of said turbine (100) to said inlet conduit (53), at least one hot volute (74) making it possible for said inlet air to circulate from said outlet conduit (54) to said combustion chamber (90), at least one intermediate nozzle (70) making it possible to direct said exhaust gases from said combustion chamber (90) to said inlet (55) of said exchanger (50) and at least one outlet nozzle (72) making it possible to direct said exhaust gases after the exit thereof through said outlet (56) of said exchanger (50).

13. Rotary-wing aircraft, **characterised in that** said aircraft comprises at least one gas turbine (100) according to any one of claims 11 to 12.
